# EUROPEAN PATENT APPLICATION

(11) **EP 1 136 915 A1**
(43) Date of publication of application: **26.09.2001**
(21) Application number: 00302418.9
(22) Date of filing: 24.03.2000
(51) Int. Cl.: G06F 17/24, G06F 17/30

(54) **Document creation and assembly**

(71) Applicant: Epoch Software Holdings PLC, London NW9 6BX (GB)
(72) Inventor: McLellan, Andrew, C/o Epoch Software Holdings Plc, Colindeep Lane, London NW9 6BX (GB)
(74) Representative: Hoarton, Lloyd Douglas Charles

(57) **Abstract**

A network based document origination and/or assembly system comprising: a host server to run a document assembly application to assemble documents from document templates, the document assembly application producing one or more questions, the server having a network connection, the or each question produced by the document assembly application being transmitted over the network; one or more document templates for assembly by the document assembly application; and a remote computer having a network connection to receive questions from the host server and a user interface for a user to respond to the question.

## Description

THIS INVENTION relates to improvements in or relating to document origination and assembly and more particularly to the origination and assembly of documents over networks.

Document origination and assembly software packages are used to create complex legal and commercial documentation. Document origination involves the preparation of a template document which includes selected questions, rules and/or conditional paragraphs. Intelligent templates can be prepared containing all the questions, instructions and notes for a user who will eventually assemble the document. The template also contains all the possible written text to be included in the assembled document and the logic which controls the insertion of this text.

A question, when inserted in the template, requires an answer which might be in the form of text, a number, a date or a choice from a pre-selected group of answers. For example, a template might include a question "employer's name" which would be answered by inserting the text of the employer's name.

Rules may also be inserted in the template. A rule comprises a set of logic based instructions which, as a function of the rule, can: insert text into the template document, perform a calculation, format text, numbers or dates, perform functions on questions, force particular questions to be asked at a certain time and create conditions. By creating a condition, it should be noted that various paragraphs can be made conditional on a particular question being answered so that the respective paragraph only appears if the question is answered. If the question is not answered, then the paragraph would disappear from the document.

Once a template document has been created using appropriate document origination software, then the resultant template can be assembled. The process of assembly involves assembly software running through the questions and applying the logic contained in the template document. As the questions are answered by a user, the document is automatically drafted to incorporate the answers and to include whatever conditional paragraphs are required and to amend sections of the document in response to those answers. Once the document has been assembled by answering all questions, then the customised document has been finalised and can be, for example, returned for engrossment to the person originating the template, printed, saved or processed in the desired manner.

All the above operations are PC based and require the user to have access to both the origination software and the assembly software. Given the immense popularity of network systems, especially the Internet, digital television services and the like, there is a need for document assembly to be implemented over, for example, the Internet.

Conventional document origination systems are provided as software packages which draw upon or link to a word-processing software package in order to allow the template to be edited and formatted. Such document origination systems are therefore not self-contained and are very complex. It is impossible to compile conventional document origination systems to one used in a plug-in architecture.

It is an object of the present invention to provide a document origination system which is compilable as a plug-in to be used in a plug-in architecture. It is a further object of the present invention to provide a browser based plug-in for document origination and assembly.

It is not practicable to implement conventional document assembly systems on platforms such as web TV because such conventional document assembly systems are configured as add-ins to word-processing systems which require significant processing power which is not available, for example, on a Web TV terminal. It is a further object of the present invention to provide a server-side document assembly system suitable for use in high bandwidth applications such as digital television systems offering Internet access (web TV).

Accordingly, one aspect of the present invention provides a network based document origination and/or assembly system comprising: a host server to run a document assembly application to assemble documents from document templates, the document assembly application producing one or more questions, the server having a network connection, the or each question produced by the document assembly application being transmitted over the network; one or more document templates for assembly by the document assembly application; and a remote computer having a network connection to receive questions from the host server and a user interface for a user to respond to the question.

Preferably, the document assembly application is held as a COM object on the server.

Conveniently, a translator is provided to act as an interface for data received from the document assembly application for transmittal over the server network connection and for data transmitted to the document assembly application from the server network connection.

Advantageously, the translator is an ISAPI translator to translate data from the document assembly application into HTML format and to translate from HTML format data for the document assembly application.

Preferably, the or each question is in HTML format when transmitted over the network.

Conveniently, substantially the only data transmitted over the network by the document assembly application is in HTML format.

Advantageously, substantially the only data transmitted over the network by the document assembly application is the or each question.

Preferably, the remote computer is embodied in a television system offering Internet access.

Another aspect of the present invention provides a method of assembling a document in a network based document origination and/or assembly system comprising the steps of: providing a document assembly application to assemble documents from document templates, the document assembly application producing one or more questions; transmitting the or each question produced by the document assembly application over a network; noting a response to the or each question; and updating a document template with each response to the or each question, thereby assembling a document from a template.

Preferably, data received from the document assembly application for transmittal over the network is translated into a format suitable for transmission over the network and data transmitted over the network to the document assembly application is translated into a format suitable for processing by the document assembly application.

Conveniently, the data from the document assembly application is translated into HTML format and data for the document assembly application is translated from HTML format.

Advantageously, the data is transmitted over the network in HTML format.

Preferably, substantially the only data transmitted over the network by the document assembly application is the or each question in HTML format.

A further aspect of the present invention provides a document origination and/or assembly program incorporating word processing functions and compiled as a plug-in.

Preferably, the plug-in is installable on a browser.

Conveniently, the plug-in is a browser based plug-in.

Preferably, the files produced by the document origination and/or assembly program are entirely self-contained files which include a document template, the logic to assemble the document and the responses which produce the fully assembled document.

In order that the present invention may be more readily understood, embodiments thereof will now be described, by way of example, with reference to the accompanying drawing, in which:

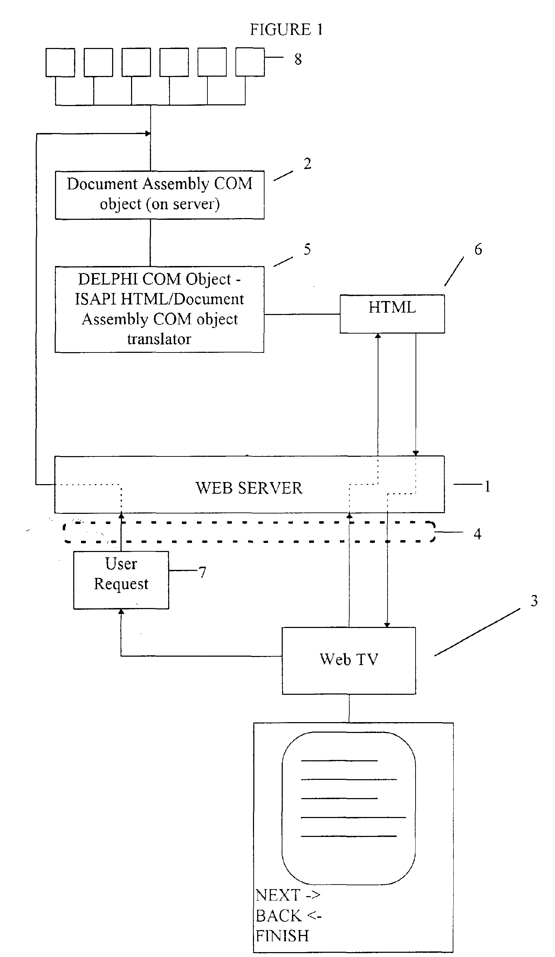

FIGURE 1 is a schematic representation of a web TV based document assembly system embodying the present invention.

One embodiment of the present invention comprises a web TV based document assembly system as shown in Figure 1. The document assembly function is substantially server based, the document assembly software being held on a web server 1 as a document assembly COM (component object model) object 2. A plurality of document templates are available to the document assembly COM object for assembly thereby.

A digital television system 3 offering Internet access (web TV) is connected to the web server 1 via an Internet connection 4. The web TV 3 incorporates a suitable microprocessor or computer and modulator/demodulator enabling Internet access.

As well as holding the document assembly COM object 2, the web server 1 also provides access to an Internet server application program interface (ISAPI) translator 5 which is operable to provide an interface between HTML data 6 received from the web server 1 for use by the document assembly COM object 2 and *vice versa*. Preferably, the ISAPI translator 5 is a DELPHI COM object held on the web server 1.

The document assembly COM object 2 is able to assemble documents from templates in response to answers provided by a remote user using the digital television system 3.

In operation, a remote user uses Internet access afforded by the digital television 3 to gain access to the website hosted by the web server 1. The remote user is presented with a menu by the digital television 3 and provided with various options including an option to assemble one of a number of documents, the templates for which are available to the document assembly COM object 2. The user selects a document template to be assembled and sends a user request 7 through the web server 1 to the document assembly COM object 2 to assemble the selected document 8. The web server 1 provides multi-user access and so a number of distinct documents 8 can be assembled at any one time. The document assembly COM object 2 is operable in response to the user request 7 to pose questions to the remote user. Once the user has provided the user request 7 to the document assembly COM object 2, the new document 8 is dedicated to that user for assembly thereby.

The selection of a particular document template drives the document assembly COM object 2 to produce a plurality of questions to the remote user. The questions are provided in groups to the remote user, the next group of questions only being posed by the document assembly COM object 2 when the previous group of questions has been answered. Groups of questions may be asked depending upon the responses to one or more questions in previous groups of questions. The COM object 2 analyses responses to questions to determine whether a group of questions should be asked. For example, if one question in a group was Sex? and the user's answer was male, then the COM object 2 would prevent a subsequent group of questions incorporating the question Maiden Name? from being asked since it is irrelevant.

The first group of questions are passed from the document assembly COM object 2 to the ISAPI translator 5 and translated into HTML thereby. The questions, now in HTML, are forwarded through the web server 1 to the user's digital television 3 over the Internet connection 4. In this manner, only HTML files need be transmitted over the web server to the remote user, thereby providing a simple system which could be readily implemented in, for example, a Web TV. Preferably, substantially the only data transmitted over the network by the document assembly application are questions in HTML format.

The remote user responds to each question in the group of questions posed by the document assembly system and transmits answers back to the document assembly system, in HTML format, to the web server 1. The answers, in HTML, are then received by the ISAPI translator 5, translated thereby, and passed to the document assembly COM object 2 for processing of the user's response. The user's document template 8 is updated with the responses to the questions and any changes to the document are effected. The user's responses are also processed by the document assembly COM object 2 to determine the next group of questions to be asked of the remote user. The next group of questions are asked to the remote user in the same manner described above and the responses thereto processed and the loop repeated until such time as all the questions necessary to assemble the document have been asked and answered.

The completed document 8 can then be delivered to the remote user by a pre-selected means such as e-mail, post or the like or printed by the remote user. Alternatively, the remote user might wish the completed document, which may be a will or other legal document, to be forwarded directly to his solicitor or other representative.

Another aspect of the present invention relates to the compilation of the document origination and/or assembly software in the form of a plug-in. A plug-in is a program which links into a more substantial application program and adds some special capability to the more substantial application. Design specifications are available for particular software applications to allow software developers to write plug-ins. The major disadvantage with conventional document origination and assembly systems is that they are complex and large software packages which must draw upon or link to a word processing software package in order to allow a template generated thereby to be edited or formatted. As such, these software packages are not self-contained and are extremely complex. It is impossible to compile such conventional document origination and/or assembly software systems in the form of plug-ins. The complexity of a plug-in for such an application would simply be unmanageable.

To overcome this difficulty, one aspect of the present invention provides a document origination and/or assembly program which is entirely self-contained incorporating its own word processing functions. This architecture significantly reduces the complexity of the software package and enables the application to be readily compiled as a plug-in, most preferably an ActiveX plug-in installable on a browser. Using this technology, a browser based plug-in (such as an ActiveX plug-in) can readily be compiled thereby enabling an Internet-based document origination and/or assembly system. The facility to distribute the document origination and assembly application in the form of a plug-in is extremely advantageous and impossible with conventional document origination and assembly applications which all draw upon or link to separate word processing applications.

By incorporating word processing functions, in the document origination and/or assembly application, much smaller file sizes are created. File sizes can also be further reduced by compressing the documents. An additional advantage is that many word processing packages are constantly being revised and new versions issued often rendering document origination and/or assembly applications redundant since they cannot make use of new functions found in the revised word processing package or old functions originally provided on earlier versions of the word processing package that are no longer supported. Thus, a self-contained document origination and/or assembly application embodying the present invention is less susceptible to becoming out-of-date.

Embodiments of the present invention produce entirely self-contained files which include not only the document template, but also the logic to assemble the document and the answers which produce the fully assembled document. Such an architecture is not taught in any of the conventional document origination and/or assembly applications.

It should be appreciated that the Web TV platform described above is just one example of an implementation of a network based document origination and/or assembly system embodying the present invention. Any other platform which can support a network browser can be used to implement the system including, but not limited to, desktop PCs, WAP mobile telephones, palmtops and the like.

In the present specification "comprise" means "includes or consists of" and "comprising" means "including or consisting of".

The features disclosed in the foregoing description, or the following claims, or the accompanying drawings, expressed in their specific forms or in terms of a means for performing the disclosed function, or a method or process for attaining the disclosed result, as appropriate, may, separately, or in any combination of such features, be utilised for realising the invention in diverse forms thereof.

## Claims

1. A network based document origination and/or assembly system comprising:
a host server to run a document assembly application to assemble documents from document templates, the document assembly application producing one or more questions, the server having a network connection, the or each question produced by the document assembly application being transmitted over the network; one or more document templates for assembly by the document assembly application; and a remote computer having a network connection to receive questions from the host server and a user interface for a user to respond to the question.

2. A network based document origination and/or assembly system according to Claim 1, wherein the document assembly application is held as a COM object on the server.

3. A network based document origination and/or assembly system according to Claim 1 or 2; wherein a translator is provided to act as an interface for data received from the document assembly application for transmittal over the server network connection and for data transmitted to the document assembly application from the server network connection.

4. A network based document origination and/or assembly system according to Claim 3, wherein the translator is an ISAPI translator to translate data from the document assembly application into HTML format and to translate from HTML format data for the document assembly application.

5. A network based document origination and/or assembly system according to any preceding claim, wherein the or each question is in HTML format when transmitted over the network.

6. A network based document origination and/or assembly system according to any preceding claim, wherein substantially the only data transmitted over the network by the document assembly application is in HTML format.

7. A network based document origination and/or assembly system according to Claim 6, wherein substantially the only data transmitted over the network by the document assembly application is the or each question.

8. A network based document origination and/or assembly system according to any preceding claim, wherein the remote computer is embodied in a television system offering Internet access.

9. A method of assembling a document in a network based document origination and/or assembly system comprising the steps of:
providing a document assembly application to assemble documents from document templates, the document assembly application producing one or more questions;
transmitting the or each question produced by the document assembly application over a network;
noting a response to the or each question; and
updating a document template with each response to the or each question, thereby assembling a document from a template.

10. A method according to Claim 9, wherein data received from the document assembly application for transmittal over the network is translated into a format suitable for transmission over the network and data transmitted over the network to the document assembly application is translated into a format suitable for processing by the document assembly application.

11. A method according to Claim 9 or 10, wherein the data from the document assembly application is translated into HTML format and data for the document assembly application is translated from HTML format.

12. A method according to any one of Claims 9 to 11, comprising the step of transmitting data over the network in HTML format.

13. A method according to Claim 12, wherein substantially the only data transmitted over the network by the document assembly application is the or each question in HTML format.

14. A computer program adapted to perform all the steps of any one of Claims 9 to 13 when said program is run on a computer.

15. A computer program as claimed in Claim 14 embodied on a computer readable medium.

16. A document origination and/or assembly program incorporating word processing functions and compiled as a plug-in.

17. A document origination and/or assembly program, wherein the plug-in is installable on a browser.

18. A document origination and/or assembly program, wherein the plug-in is a browser based plug-in.

19. A document origination and/or assembly program, wherein the files produced by the document origination and/or assembly program are entirely self-contained files which include a document template, the logic to assemble the document and the responses which produce the fully assembled document.

20. A network based document origination and/or assembly system substantially as hereinbefore described with reference to and as shown in the accompanying drawing.

21. A method of assembling a document in a network based document origination and/or assembly system substantially as hereinbefore described with reference to and as shown in the accompanying drawing.

22. A document origination and/or assembly program substantially as hereinbefore described with reference to and as shown in the accompanying drawing.

23. Any novel feature or combination of features disclosed herein.
